# EUROPEAN PATENT APPLICATION

(11) **EP 0 786 688 A2**
(43) Date of publication of application: **30.07.1997**
(21) Application number: 97100199.5
(22) Date of filing: 08.01.1997
(51) Int. Cl.: G03B 21/64, H04N 1/04, H04N 1/10, H04N 1/387

(54) **Original holder device and image reading apparatus using the same**

(30) Priority: 10.01.1996 JP 20488/96; 16.12.1996 JP 353525/96
(71) Applicant: Dainippon Screen Mfg. Co., Ltd., Kamikyo-ku Kyoto 602 (JP)
(72) Inventor: Itanu, Yoshiharu, Dainippon Screen Mfg. Co., Ltd., Horikawa-dori, Kamikyo-ku, Kyoto (JP); Kishida, Yoshihiro, Dainippon Screen Mfg.Co., Ltd., Horikawa-dori, Kamikyo-ku, Kyoto (JP)
(74) Representative: Goddar, Heinz J., Dr.

(57) **Abstract**

Discloses:-
a) A tray like sheet slide holder (1) for storing a plurality of slides, including a plurality of recesses (5), each recess having resilient clips (7a,7b) for receiving an securing a transparency frame (10) and an aperture (3a-3f) for viewing through or back illuminating the slide.
b) A slide frame (10) comprising two portions (12,14) hinged together, which can be closed for holding an original film transparency (P) therebetween. The frame (10) includes a plurality of apertures, holes (24,26) along its border (image identification zone) providing additional information indicating image orientation of the transparency (landscape, portrait) and number of images contained therein. The holes can be read by an optical light barrier.
c) An flat bed type optical scanner (100) comprising a fixed linear array of CCD (118) for reading images supported on the slide holder (1) and including means for scanning all the slides supported on the holder at low resolution, means for displaying all images on a computer monitor screen (159,CRT), means for selecting one of the displayed images, means for re-scanning the selected image at high resolution and for displaying it enlarged, magnified on the screen.
d) The scanner includes also means for reading additional information representing orientation and number of images on each slide during the low resolution scanning and means for electronically rotating the scanned images so that they are all displayed upright on the screen (159).

## Description

### BACKGROUND OF THE INVENTION

### Field of the Invention

The present invention relates to an original holder device applied for a flat bed-type image reading apparatus that reads an image set in a planar arrangement, and more specifically to an original holder device on which a plurality of originals can be mounted. The invention also pertains to an image reading apparatus using the same.

### Description of the Prior Art

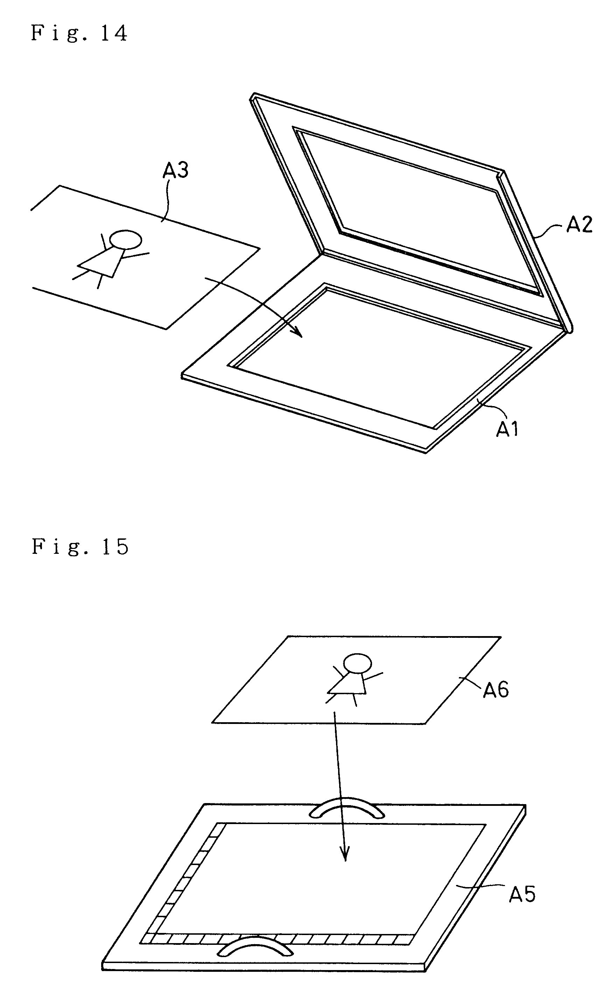

Two types of original holder devices are conventionally used for flat bed-type image reading apparatuses. Fig. 14 shows a holder-type device that has a lower frame A1 and an upper frame A2 which can be freely closed and opened to enable an original A3, such as a film, to be interposed between the lower frame A1 and the upper frame A2. Fig. 15 shows a tray-type device that has a transparent glass plate A5 to which an original A6 is stuck.

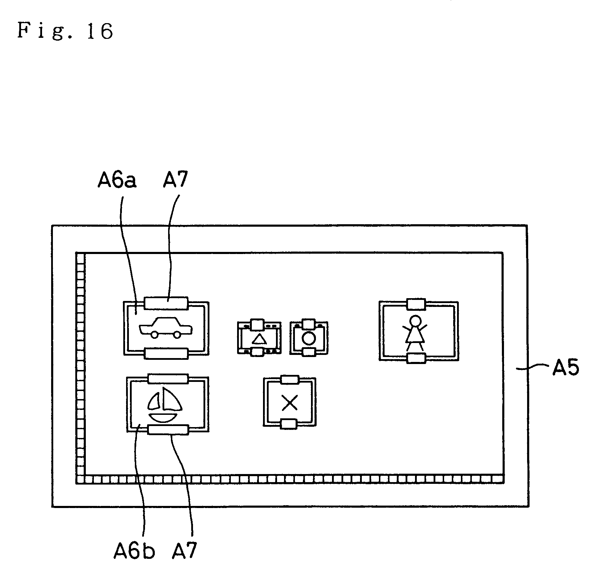

The holder-type devices are generally used for scanners having a smaller scanning area, while the tray-type devices are suitable for those having a greater scanning area. The tray-type devices are also preferable for reading a plurality of originals concurrently. In this case, a plurality of originals A6a, A6b,... are applied on the glass plate A5 by a tape or the like as shown in Fig. 16.

The conventional tray-type original holder device for holding a plurality of originals, however, has the following problems; that is, it is rather difficult to appropriately position the originals and adjust the angles thereof, and the procedure of applying the originals with a tape is labor- and time-consuming. Namely the procedure of applying originals on the glass plate worsens the whole working efficiency.

### SUMMARY OF THE INVENTION

The object of the present invention is thus to simplify a procedure of positioning originals and adjusting angles thereof as well as setting originals, thereby improving the whole working efficiency.

At least part of the above and other related objects is realized by an original holder device applicable for a flat bed-type image reading apparatus that reads an image set in a planar arrangement. The original holder device of the present invention includes: an original holder for holding an original; and a base member having a plurality of openings arranged in a plane to receive the original holder.

In the original holder device of the invention (hereinafter referred to as the original holder device of the basic structure), an original holder with an original held therein are set in the respective openings of the base member. This structure does not require any time-consuming process of positioning the original and adjusting the angles thereof. Unlike the conventional structure, the structure of the invention does not require any specific operation for applying the original, but simply sets the original in the original holder. This improves the working efficiency for setting an original in the original holder device.

In the original holder device of the basic structure, each opening preferably has a depressed step part, on which the original holder is mounted, and a click part made of a resilient material for securely holding and supporting the original holder. This structure enables the original holder to be quickly and securely set in the respective openings of the base member.

In the original holder device of the basic structure, the original holder may has a substantially square external shape. The substantially square external shape of the original holder enables the original holder to be set in two or more different directions into the opening of the original holder device.

In accordance with one preferable application of the present invention, in the original holder device of the basic structure, each original holder includes an identification zone representing identification information for the original set in original holder. This structure is hereinafter referred to as the first applicable structure. In the first applicable structure, identification information for an original set in the original holder device is obtained by reading the identification zone arranged in each original holder.

In the original holder device of the first applicable structure, the original holder preferably has a substantially square external shape and includes a plurality of the identification zones that have a rotational symmetry by integral multiples of 90 degrees.

The substantially square external shape of the original holder enables the original holder to be set in two or more different directions into the opening of the original holder device. In this structure, a plurality of identification zones are symmetrically arranged at integral multiples of 90 degrees. Even when the originals are set in different directions into the respective openings, one detection unit is sufficient for detecting the plurality of identification zones to obtain the required identification information. This simplifies the structure of the image reading apparatus.

In the original holder device of the first applicable structure, the identification information may be expressed by existence or non-existence of a through hole made in said identification zone.

The identification information preferably represents a direction of each original set in the original holder device. This structure is hereinafter referred to as the second applicable structure.

The present invention is also directed to an image reading apparatus for receiving an original holder device of the basic structure. The image reading apparatus of the invention includes: first scanning means for sequentially reading originals held by originals holders set in the original holder device in an optical manner with a first resolution; display means for displaying images on a screen; first display control means for enabling images of the originals read by the first scanning means to be all displayed on the screen of the display means; selection means for selecting one original image among all the original images displayed on the screen of the display means in response to a use's operation; second scanning means for optically reading an original held by the original holder corresponding to the selected original image with a second resolution that is higher than the first resolution; and second display control means for enabling an image of the original read by the second scanning means to be displayed on the screen of the display means.

In the image reading apparatus of the invention, the first display control means enables images for all the original holders set in the original holder device to be displayed on the screen of the display means with a low resolution. When the selection means selects one among the displayed original images, the second display control means enables an image of the original corresponding to the selected original image to be displayed on the screen of the display means with a high resolution. The images displayed by the first display control means are read by the first scanning means, whereas the image displayed by the second display control means is read by the second scanning means. The former corresponds to a rough scan, and the latter to a main scan. This structure enables images of desired originals to be displayed by a simple operation.

In accordance with another preferable application of the present invention, an cage reading apparatus for receiving an original holder device of the first applicable structure includes: scanning means for sequentially reading originals held by originals holders set in the original holder device in an optical manner as well as for optically reading the identification zone; and means for discriminating each image of said original read by said scanning means, based on the identification information of said identification zone read by said scanning means.

This structure allows the scanning means to read images of the original as well as the identification information on the original. This further simplifies the structure of the image reading apparatus.

In accordance with still another preferable application of the present invention, an image reading apparatus for receiving an original holder device of the second applicable structure includes: scanning means for sequentially reading originals held by originals holders set in the original holder device in an optical manner as well as for optically reading the identification Zone; and means for changing direction of each image of the original read by the scanning means to an upright orientation, based on the identification information read by the scanning means.

This structure allows the scanning means to read images of the originals as well as the identification information on the originals, and changes the direction of each original image read by the scanning means to an upright orientation in accordance with the identification information. This enables the image of the original to be consistently displayed upright, irrespective of the direction of setting the original into the opening of the original holder device.

These and other objects, features, aspects, and advantages of the present invention will become more apparent from the following detailed description of the preferred embodiment with the accompanying drawings.

### BRIEF DESCRIPTION OF THE DRAWINGS

Fig. 1 is a perspective view illustrating an original holder device in accordance with one embodiment of the present invention;
Fig. 2 is a perspective view showing the appearance of an original holder 10 in an open state;
Fig. 3A-3C are plan, front and side views illustrating the appearance of the original holder 10 in a closed state;
Fig. 4 is a plan view illustrating an original tray 1;
Fig. 5 is a perspective view illustrating a first opening 3a formed in the original tray 1;
Fig. 6 is a plan view illustrating the first opening 3a with the original holder 10 set therein;
Fig. 7 is a cross sectional view taken on the line A-A' of Fig. 6;
Fig. 8 is a plan view illustrating the original tray 1, wherein original holders are set in all the openings 3a through 3f;
Fig. 9 is a side view schematically illustrating an internal structure of a flat bed-type scanner 100;
Fig. 10 is a block diagram showing electrical structure of the flat bed-type scanner 100;
Fig. 11 is a flowchart showing an original image input routine executed by the CPU 151 of the flat bed-type scanner 100;
Fig. 12 shows an example of a display on the screen of the CRT display 159 after a rough scan;
Fig. 13 shows an example of a display on the screen of the CRT display 159 after a main scan;
Fig. 14 illustrates a conventional holder-type original holder device;
Fig. 15 illustrates a conventional tray-type original holder device; and
Fig. 16 illustrates a conventional tray-type original holder device wherein a plurality of originals are applied on a glass plate.

### DESCRIPTION OF THE PREFERRED EMBODIMENTS

One preferred embodiment of the present invention is discussed below with reference to the drawings.

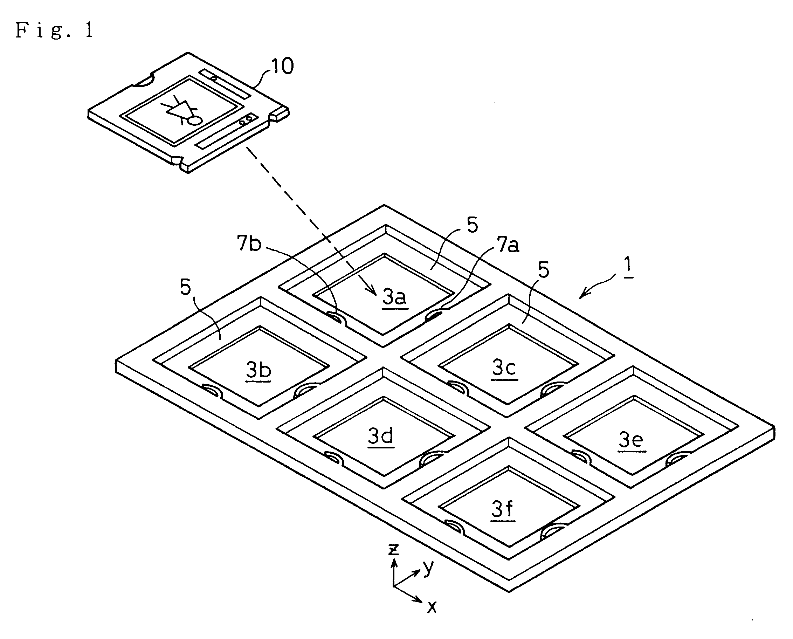

Fig. 1 is a perspective view illustrating an original holder device in accordance with one embodiment of the present invention. Referring to Fig. 1, the original holder device includes an original tray 1 and a plurality of original holders 10 set in the original tray 1. The original tray 1 has a rectangular plate-like framework having first through sixth openings 3a, 3b, 3c, 3d, 3e, and 3f formed therein. The first through the sixth openings 3a through 3f have an identical shape and configuration and respectively receive the original holders 10 therein. The original tray 1 is typically composed of an acrylic resin.

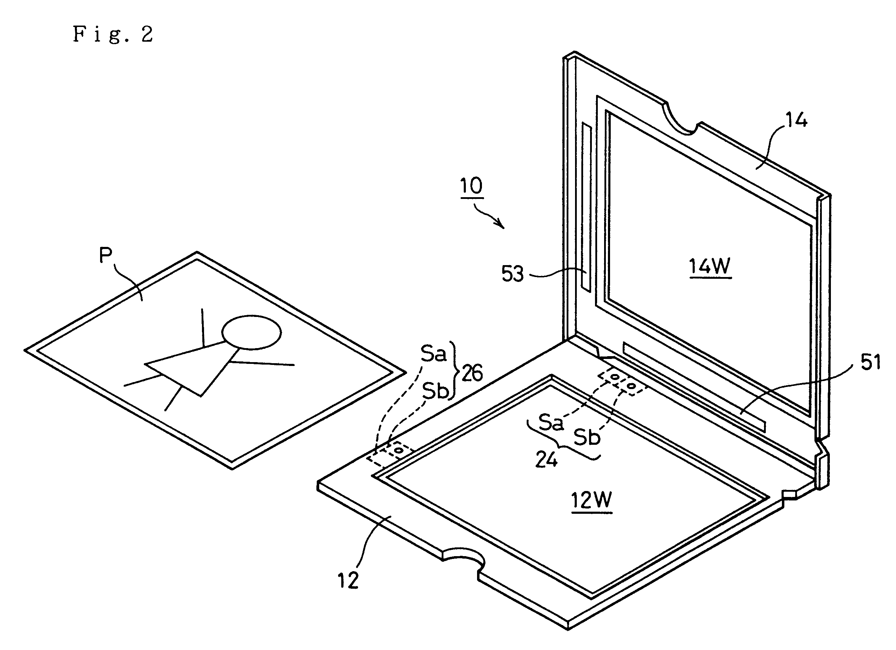

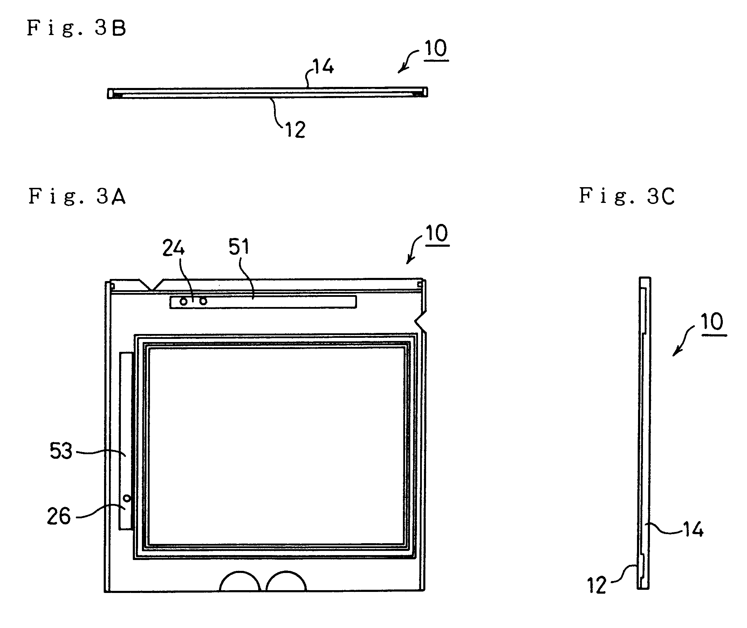

Fig. 2 is a perspective view showing the appearance of the original holder 10 in an open state; Figs. 3A-3C are plan, front and side views illustrating the appearance of the original holder 10 in a closed state. Referring to Figs. 2 and 3A-3C, each original holder 10 includes a lower frame 12 and an upper frame 14 which can be freely opened and closed. Windows 12W and 14W are formed inside the respective frames 12 and 14. An original P is placed between the lower frame 12 and the upper frame 14 of the original holder 10 to be observable through the windows 12W and 14W, while the periphery of the original P is securely held between the lower frame 12 and the upper frame 14. Both the lower frame 12 and the upper frame 14 are typically made of an acrylic resin.

Referring to the plan view of Fig. 3A, the original holder 10 in the closed state has a substantially square external shape. The frame work 12 of the original holder 10 has a first identification hole unit 24 and a second identification hole unit 26 that are used for identifying the direction of the original holder 10 set into the original tray 1 and the type of the original P held by the original holder 10.

The first identification hole unit 24 and the second identification hole unit 26 are arranged at symmetrical positions when the original holder 10 is rotated by 90 degrees around a central axis perpendicular to the surface of the original holder 10. Each of the identification hole units 24 and 26 has two different aperture zones Sa and Sb as shown in Fig. 2. The first aperture zone Sa near a click 7a in each opening 3a-3f represents the direction of the original holder 10 in the original tray 1. In case that the first aperture zone Sa near the click 7a has an aperture, the side of the first identification hole unit 24 of the original holder 10 is at the front when the original tray 1 is inserted into a scanner in the longitudinal direction of the original tray 1 (that is, the direction x in Fig. 1). Fig. 1 shows such a positional relationship between the original holder 10 and the original tray 1. When no aperture is formed in the first aperture zone Sa near the click 7a in the opening, on the other hand, the side of the second identification hole unit 26 of the original holder 10 is at the front when the original tray 1 is inserted into the scanner in the longitudinal direction of the original tray 1. The second aperture zone Sb represents the type of the original P held by the original holder 10. In case that an aperture is formed in the second aperture zone Sb, this represents a film original of 4"× 5" in size. In case that no aperture is formed in the second aperture zone Sb, on the other hand, this represents six 35mm-film originals. In the example of Figs. 2 and 3, the first identification hole unit 24 has apertures formed in both the first aperture zone Sa and the second aperture zone Sb, while the second identification hole unit 26 has an aperture formed only in the second aperture zone Sb.

In accordance with an alternative structure, a plurality of apertures may be formed in each of the first and second aperture zones Sa and Sb. In this case, the identification information, that is, the direction of the original holder 10 set into the original tray 1 and the type of the original P held by the original holder 10, may be expressed by the arrangement of a plurality of apertures coded in accordance with the combination of the apertures.

Referring to Figs. 2 and 3A-3C, the upper frame 14 has transparent slits 51 and 53 that enable a scanner to read identification information represented by the first identification hole unit 24 and the second identification hole unit 26 in an optical manner while the upper frame 14 and the lower frame 12 are in the closed state.

The following describes a typical procedure of setting the original P into the original holder 10 thus constructed. While the upper frame 14 of the original holder 10 is open, the original P is placed along a step at the periphery of the window 12W of the lower frame 12. At this moment, the original P is placed in such a manner that the top edge of the original P is set on the side of the first identification hole unit 24, that is, on the side of the axis along which the lower frame 12 and the upper frame 14 are joined with each other. The upper frame 14 is then closed. This procedure enables the original P to be set in a fixed direction relative to the original holder 10.

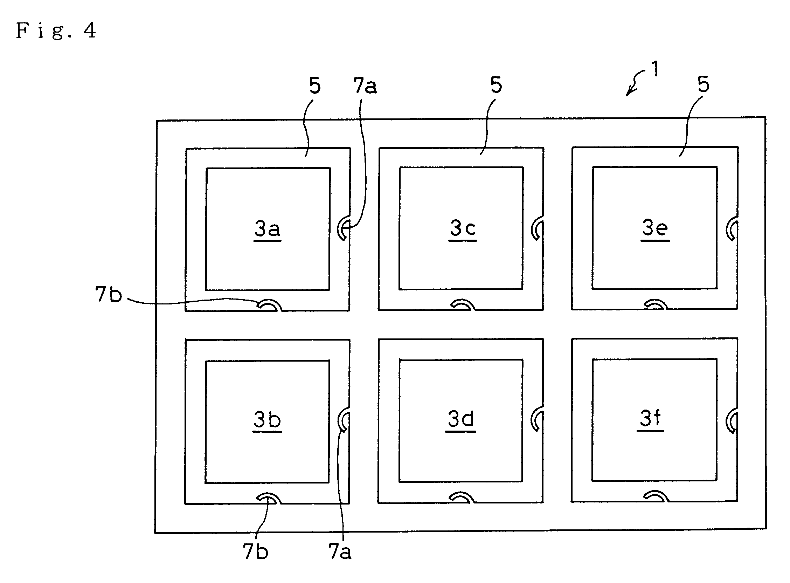

Fig. 4 is a plan view illustrating the original tray 1. Referring to Figs. 1 and 4, the first through the sixth openings 3a through 3f formed in the original tray 1 respectively have depressed, stepped parts 5. Each stepped part 5 has a substantially square shape and makes the area of each opening on its rear or bottom side smaller than the area of the opening on its front or upper side, so as to enable the original holder 10 therein.

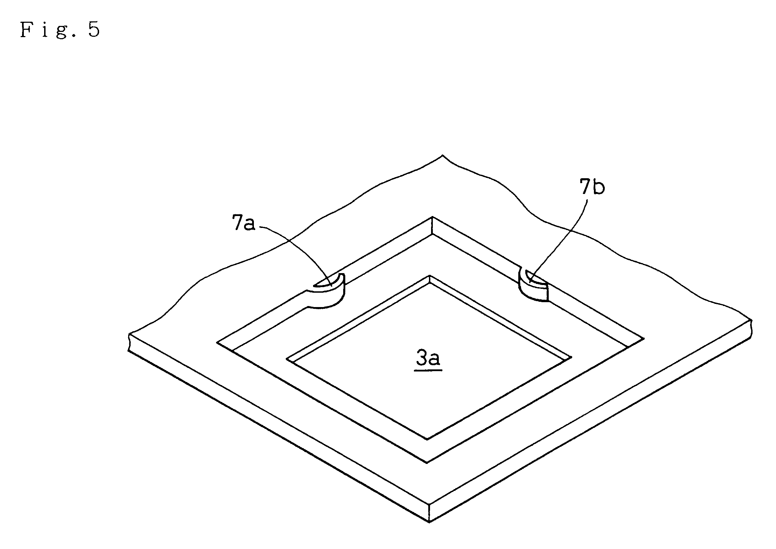

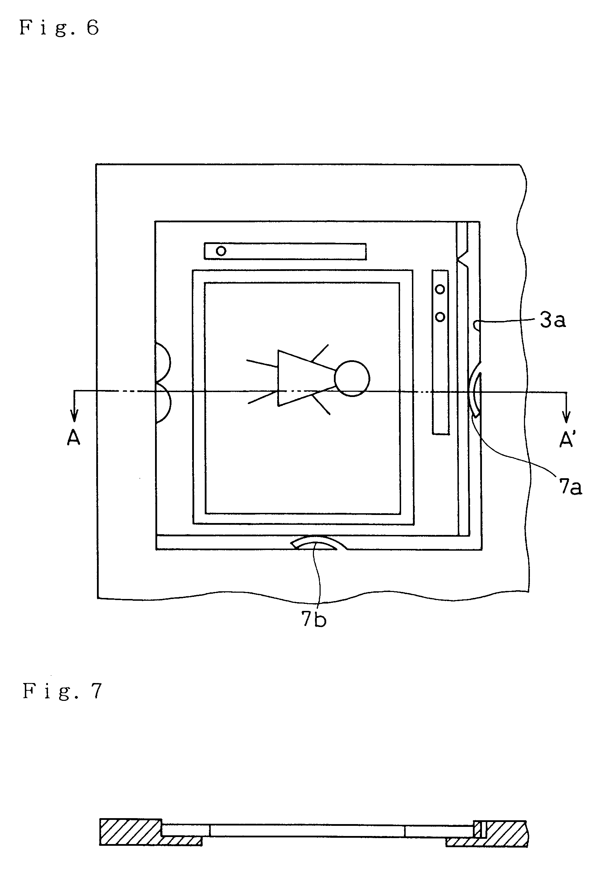

Each of the first through the sixth openings 3a through 3f has two clicks 7a and 7b as shown in Fig. 5. The clicks 7a and 7b are formed integrally with the main body of the original tray 1 and composed of the same acrylic resin to have a resilient force. Referring to the plan view of Fig. 6 and the cross sectional view of Fig. 7 taken on the line A-A', the clicks 7a and 7b press the original holder 10 received in each of the openings 3a through 3f from two different directions.

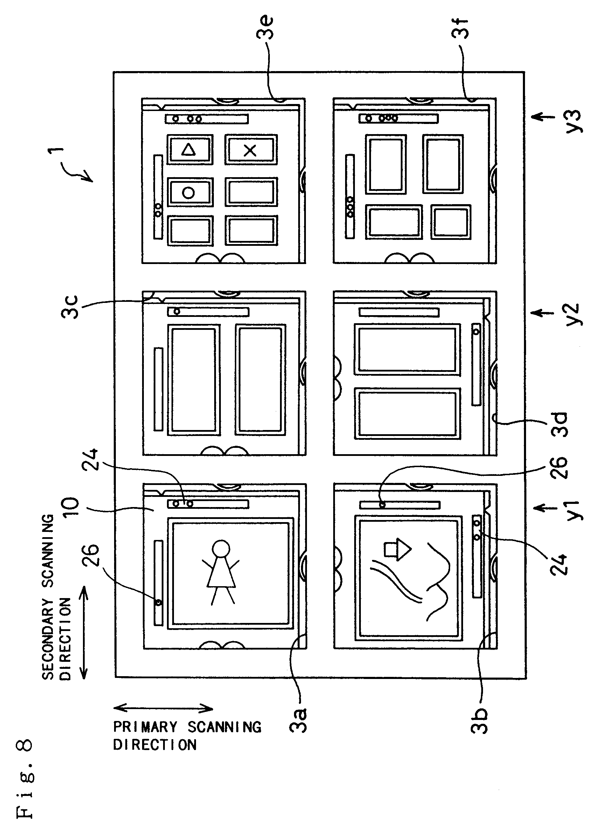

Fig. 8 is a plan view illustrating the original tray 1, wherein original holders are set in all the first through the sixth openings 3a through 3f of the original tray 1. Referring to Fig. 8, there are various types of original holders: those for holding only one original as shown in the left column of the drawing (that is, the original holders 10 discussed above); those for holding two originals as shown in the central column of the drawing; and those for holding three or more originals as shown in the right column of the drawing. Like the original holders 10, the original holders of any type have a substantially square external shape and enable originals to be readily set in the openings of the original holders.

Although the original holders are set in all the first through the sixth openings 3a through 3f in the example of Fig. 8, some openings may not receive any original holders.

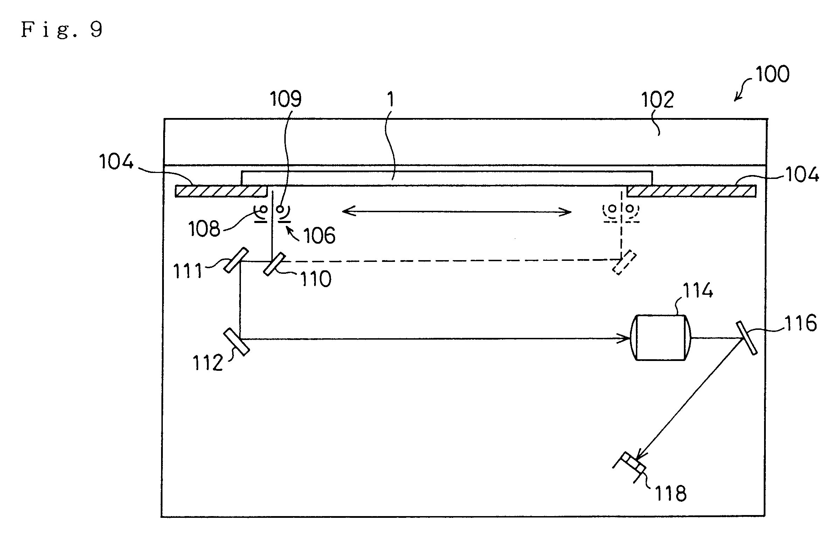

The following describes a typical structure of a flat bed-type scanner 100 to which the original tray 1 is applied. Fig. 9 is a side view schematically illustrating an internal structure of the flat bed-type scanner 100. Referring to Fig. 9, the flat bed-type scanner 100 has a cover 102. After the cover 102 is opened, the original tray 1 is placed face downward on a tray table 104. A scanning head 106 is arranged below the original tray 1 set at the predetermined position. The scanning head 106 includes two fluorescent lamps 108 and 109 working as a light source for irradiating the original tray 1 with rays. The rays emitted from the fluorescent lamps 108 and 109 are reflected by the original P that is held by the original holder 10 set in the original tray 1, and enter line CCDs (charge-coupled devices) 118 with RGB filters via folded mirrors 110 to 112, a lens 114, and another folded mirror 116 to be converted to electrical signals. The image of the original P on the original tray 1 is accordingly captured as multi-tone electrical signals.

The line CCDs 118 not only receive the image of the original P but optically read the arrangement of the apertures in the first identification hole unit 24 (or alternatively the second identification hole unit 26) of the original holder 10 set in the original tray 1. In the drawing of Fig. 8, the line CCDs captures an image in a primary scanning direction while the scanning head 106 moves in a secondary scanning direction. At a position y1 in the secondary scanning direction, identification information represented by the first identification hole units 24 (or alternatively the second identification hole units 26) of the two original holders 10 in the left column of the drawing are read by the line CCDs 118. At a position y2 in the secondary scanning direction, another identification information represented by the identification hole units of the two original holders in the central column of the drawing are read by the line CCDs 118. At a position y3 in the secondary scanning direction, identification information represented by the identification hole units of the two original holders in the right column of the drawing are read by the line CCDs 118.

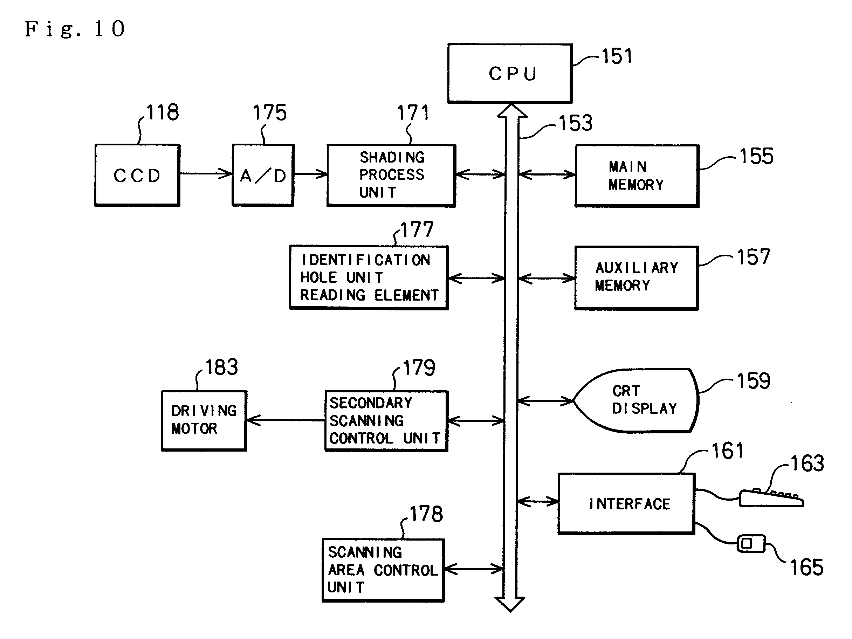

The following describes electrical structure of the flat bed-type scanner 100 based on the block diagram of Fig. 10. Referring to Fig. 10, the flat bed-type scanner 100 includes a CPU 151, a bus line 153, and the following constituents connected to the CPU 151 via the bus line 153:
a main memory 155 for storing processing programs and working data;
an auxiliary memory 157 for storing image data of a scanned original and other data used for various processes;
a CRT display 159 for displaying an image based on the image data;
an interface 161 for connecting a keyboard 163 and a mouse 165 to the CPU 151;
a shading process unit 171 for calculating a scattering between the respective elements of the line CCDs 118 and making a correction to give uniform outputs of the respective elements;
an A-D converter 175 for converting analog signals from the line CCDs 118 to digital signals and sending the digital signals to the shading process unit 171;
an identification hole unit reading element 177 for reading the arrangement of the apertures in the first and second identification hole units 24 and 26 of the original holder 10 based on the scanning signals;
a scanning area control unit 178 for controlling a scanning area of the original P set in the original tray 1; and
an secondary scanning control unit 179 for outputting a control signal to a driving motor 183 that drives and moves the scanning head 106, in order to control a movement of the scanning head 106 in the secondary scanning direction.

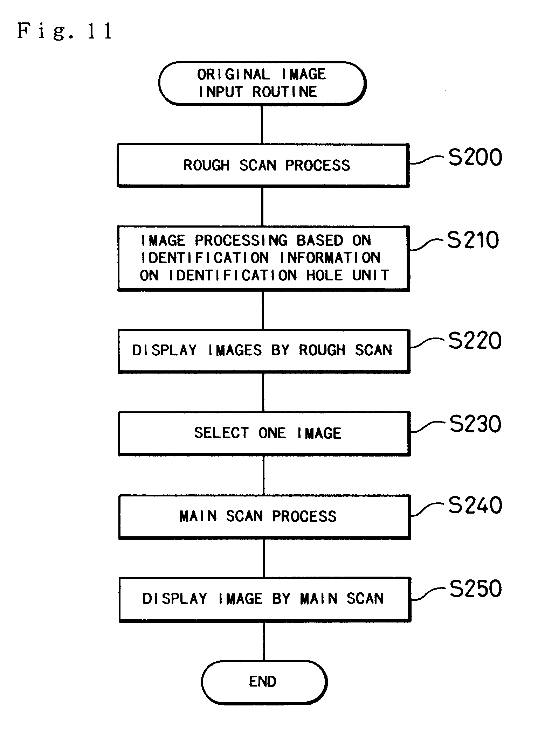

The CPU 151 of the flat bed-type scanner 100 executes an original image input routine shown in the flowchart of Fig. 11.

When the program enters the original image input routine of Fig. 11, the CPU 151 first carries out a rough scan process, that is, scans originals set in the original tray 1 with a low resolution, at step S200. The rough scan process is implemented automatically. While the scanning head 106 moves in the secondary scanning direction from the position y1 to the position y2 and then to the position y3, the identification hole unit reading element 177 reads the first identification hole unit 24 (or alternatively the second identification hole unit 26) of each original holder 10 set in the original tray. The CPU 151 determines the type of the original held by each original holder, based on the identification information of the identification hole unit 24 or 26, and detects the positions where the originals exist. The positions of the originals set in the respective original holders 10 can be detected according to the types of the originals thus determined, since the number of originals and their positions are determined in advance corresponding to each type of the original. The CPU 151 then drives the scanning head 106 via the secondary scanning control unit 179 according to the results of detection, and scans the originals held by the respective original holders with a low resolution.

At subsequent step S210, the CPU 151 determines the direction of setting the original holders 10 based on the identification information of the identification hole unit 24 or 26, and carries out image processing, that is, changes the directions of the images corresponding to the respective original holders 10 read by the rough scan process to an upright orientation. As discussed previously, the original P set in the original holder 10 is arranged in a fixed direction relative to the original holder 10. The determination of the direction, in which each original holder 10 is set, based on the identification information of the identification hole units 24 and 26 determines the direction of the original P in the original tray 1. At step S210, the image of each original P read by the rough scan process is rotated according to the requirement, based on the direction of the original P thus determined. This procedure enables all the images of the originals set in the respective original holders 10 to be arranged in an upright orientation. The program then proceeds to step S220, at which the processed images are all displayed on the CRT display 159.

By way of example, in case that the original holder 10 is set in the first opening 31 of the original tray 1 to make the first identification hole unit 24 thereof located at the position y1 in the secondary scanning direction as show in Fig. 8, the CPU 151 determines that the image which has been read by the rough scan process and is located in the first opening 3a is arranged in an upright orientation. In this state, the image is directly displayed on the CRT display 159 without any rotational motion. As another example, in case that the original holder 10 is set in the second opening 3b of the original tray 1 to make the second identification hole unit 26 thereof located at the position y1 in the secondary scanning direction as shown in Fig. 8, on the other hand, the CPU 151 determines that the image which has been read by the rough scan process and is located in the second opening 3b is arranged at an angle of 90 degrees in the clockwise direction. In this state, the image is rotated counterclockwise by the angle of 90 degrees and then displayed on the CRT display 159.

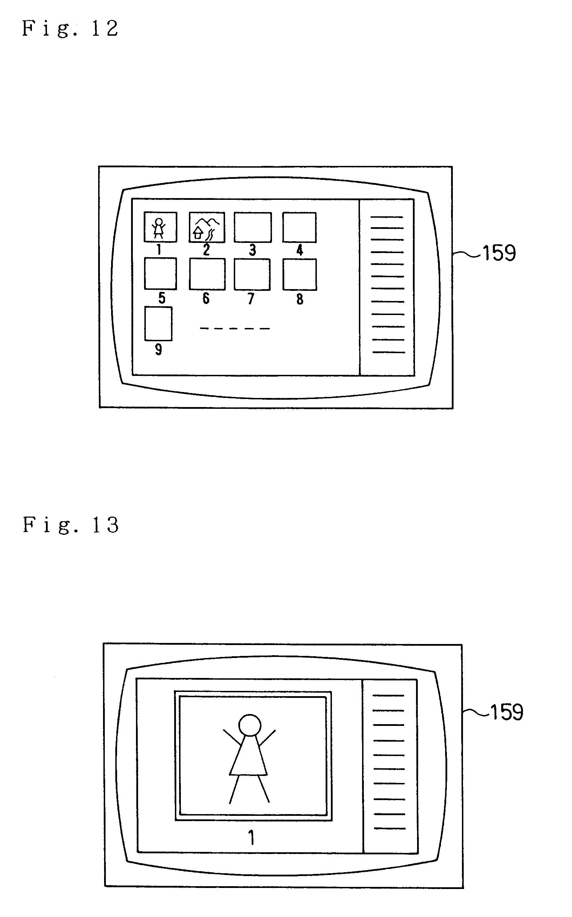

Fig. 12 shows an example of a display on the screen of the CRT display 159 after the processing of step S220. Referring to Fig. 12, all the images of the originals held by the original holders 10 set in the original tray 1 are displayed in an upright orientation. The respective images have relatively low resolutions and enable the operator to roughly understand the images.

When the operator selects an arbitrary image among the images on the CRT display 159 with the mouse 165 at step S230, the CRT 151 carries out a main scan process for the selected image at step S240. The main scan process scans and reads the original held by the original holder 10 corresponding to the selected image with a high resolution. The image obtained by the main scan process is then shown on the CRT display 159 at step S250. The image obtained by the main scan process is also rotated according to the requirement, so that the image of the selected original P is arranged in an upright orientation. Fig. 13 shows an example of a display on the screen of the CRT display 159 after the processing of step S250. Each selected image is enlarged and displayed in an upright orientation with a high resolution. The program then goes to END and exits from this routine.

In accordance with a preferable application, the selected image is enlarged on the screen of the CRT display 159 after the processing of step S230. This enables the operator to give a required instruction for the set-up operation, such as trimming, with respect to the selected image. After the set-up operation, the program proceeds to the main scan process of step S240.

The original image input routine discussed above reads the information on the first and the second identification hole units 24 and 26 of the original holders 10 set in the original tray 1, so as to automatically determine the types of the originals and their positions and setting directions for all the originals held in the original tray 1. Only one rough scan accordingly obtains the required information on the originals, and automatically reads the originals on the specific setting conditions in accordance with the information thus obtained. Compared with the conventional structure that requires a rough scan for each image after a rough scan on the whole original tray, the structure of the embodiment simplifies the procedure of image input.

The original holders 10 with the originals P held therein are set in the respective openings 3a through 3f of the original tray 1. This structure does not require any time-consuming process of positioning the originals and adjusting the angles thereof. Unlike the conventional structure, the structure of the embodiment does not require any specific operation for applying the originals on the glass plate, but simply sets each original P in the original holder 10. This improves the working efficiency for setting a plurality of originals in the original holder device.

Each original holder 10 of the embodiment has a substantially square external shape, which allows the direction of the original to be freely determined when the original is set in any of the first through the sixth openings 3a through 3f. The original holder device of the embodiment has the plurality of identification hole units 24 and 26 that are symmetrical at the integral multiples of 90 degrees. Even when the originals are set in different directions into the respective openings, one detection unit (that corresponds to the scanning system for reading the image in the above embodiment) is sufficient for detecting the plurality of identification hole units 24 and 26. This further simplifies the structure of the flat bed-type scanner 100.

In the above embodiment, the identification information of the identification hole units 24 and 26 is optically read by the scanning system that scans the image of the original P. The identification information may, however, be read in a different may. By way of example, pins may be formed on the original tray 1 to mechanically read the arrangement of the apertures in the identification hole units 24 and 26.

In the above embodiment, the original P is set in a fixed direction relative to the original holder 10. In accordance with an alternative structure, the original P may be set to the original holder 10 in the direction that is determined according to the type of the original. This alternative structure is described briefly.

The originals in rectangular shape include those having images of an upright orientation along the width and those having images of an upright orientation along the length. In case of the originals having images of an upright orientation along the width, the original P is set into the original holder 10 in the state shown in Fig. 2, that is, in the manner that makes the top side of the original P close to one identification hole unit (for example, the first identification hole unit 24). In case of the originals having images of an upright orientation along the length, on the other hand, the original P is set into the original holder 10 in the manner that makes the top side of the original P close to the other identification hole unit (for example, the second identification hole unit 26).

Each original holder 10 is then set into the original tray 1 in the manner that makes the top side and the bottom side of each original P in the original holder 10 perpendicular to the primary scanning direction and enables the top side of the original P to be scanned first in the secondary scanning direction by the flat bed-type scanner 100. This corresponds to the direction 'x' in the drawing of Fig. 1.

This structure enables the image of each original set on the original tray 1 to be scanned consistently in an upright orientation. The arrangement of the first identification hole unit 24 or the second identification hole unit 26 read for each original holder 10 is used to identify whether the original P in the original holder 10 has images of an upright orientation along the length or along the width. Based on this identification, the image of the original P in each original holder 10 is scanned along the length or along the width. This results in displaying images of the scanned area in an upright orientation.

The present invention is not restricted to the above embodiment, but there may be many modifications, changes, and alterations without departing from the scope or spirit of the main characteristics of the present invention.

It should be clearly understood that the above embodiment is only illustrative and not restrictive in any sense. The scope and spirit of the present invention are limited only by the terms of the appended claims.

The features disclosed in the foregoing description, in the claims and/or in the accompanying drawings may, both separately and in any combination thereof, be material for realising the invention in diverse forms thereof.

## Claims

1. An original holder devise for use with a flat bed-type image reading apparatus that reads an image set in a planar arrangement, said original holder device comprising: at least one original holder (10) for holding an original; and a base member (1) having a plurality of openings (3a..3f) arranged in a plane, each opening (3a..3f) being arranged to receive a respective one of the at least one original holders (10).

2. An original holder device in accordance with Claim 1, wherein each opening (3a..3F) comprises: a depressed step part (5) on which said original holder (10) is mounted; and a click part (7a,7b) made of a resilient material for securely holding and supporting said original holder (10).

3. An original holder device in accordance with Claim 1 or 2, wherein said original holder (10) has a substantially square external shape.

4. An original holder device in accordance with any preceding claim, wherein said original holder (10) comprises an identification zone (24,26) representing identification information for said original set in said original holder (10).

5. An original holder device in accordance with Claim 4, wherein said original holder (10) has a substantially square external shape and comprises a plurality of said identification zones (24,26) that have a rotational symmetry by integral multiples of 90 degrees.

6. An original holder device in accordance with Claim 4 or 5, wherein said identification information is expressed by existence or non-existence of a through hole (5a,5b) made in said identification zone (24,26).

7. An original holder device in accordance with any one of Claims 4 to 6, wherein the identification information represents a direction of said original set in said original holder device.

8. An image reading apparatus for receiving an original holder device in accordance with Claim 1, said image reading apparatus comprising: first scanning means for sequentially optically reading originals held by original holders (10) set in said original holder device at a first resolution; display means for displaying images on a screen; first display control means for enabling images of said originals read by said first scanning means to be all displayed on the screen of said display means; selection means for selecting one original image among all the original images displayed on the screen of said display means in response to a user operation; second scanning means for optically reading an original held by said original holder (10) corresponding to the selected original image at a second resolution that is higher than the first resolution; and second display control means for enabling an image of said original read by said second scanning means to be displayed on the screen of said display means.

9. An image reading apparatus for receiving an original holder device in accordance with Claim 4, said image reading apparatus comprising: scanning means for sequentially optically reading originals held by original holders (10) set in said original holder device as well as for optically reading the identification zone (24,26); and means for discriminating each image of said original read by said scanning means, based on the identification information of said identification zone (24,26) read by said scanning means.

10. An image reading apparatus for receiving an original holder device in accordance with Claim 7, said image reading apparatus comprising: scanning means for sequentially optically reading originals held by original holders set in said original holder device as well as for optically reading the identification zone; and means for changing direction of each image of said original read by said scanning means to an upright orientation, based on the identification information of said identification zone (24,26) read by said scanning means.
